# EUROPÄISCHE PATENTSCHRIFT

(11) **EP 3 530 146 B1**
(45) Veröffentlichungstag und Bekanntmachung des Hinweises auf die Patenterteilung: **02.06.2021**
(21) Anmeldenummer: 19000093.5
(22) Anmeldetag: 20.02.2019
(51) Int. Cl.: A47B 57/48, A47B 96/14, F16B 12/38, A47B 47/02

(54) **PROFILE UND STRUKTURELEMENTE FÜR DEN BAU TRAGENDER STRUKTUREN**
PROFILES AND STRUCTURE ELEMENTS FOR BUILDING LOAD-BEARING STRUCTURES
PROFILÉS ET ÉLÉMENTS DE STRUCTURE POUR LA CONSTRUCTION DE STRUCTURES PORTEUSES

(30) Priorität: 23.02.2018 IT 201800002975
(43) Veröffentlichungstag der Anmeldung: 28.08.2019
(73) Patentinhaber: Borz Srl, 38068 Rovereto (TN) (IT)
(72) Erfinder: Borz, Fabio, 38068 Rovereto (TN) (IT)
(74) Vertreter: Oberosler, Ludwig

(56) Entgegenhaltungen:
- EP-A2- 0 151 902
- GB-A- 2 048 351

## Beschreibung

Die Erfindung bezieht sich auf Profile und Strukturelemente für den Bau tragender Strukturen, wie z.B. Regale, Trägergestelle, Bücherregale, und auf das Kupplungs- und Verbindungssystem zwischen den einzelnen Strukturelementen um eine schnelle und einfache Montage/Demontage, ohne dem Einsatz spezifischer Werkzeuge, zu erreichen.

Aus der AT 303295 ist ein "Gestell" bekannt welches aus vertikalen Pfosten und horizontalen Längsträgern, bzw. Ablagen, besteht; wobei die Pfosten aus parallel zusammengesetzten Profilen bestehen welche zwischen sich, im Bereich der vertikalen Verbindungsflächen, eine Reihe gleich beabstandeter Einhängelemente für die entsprechenden Einhängenden der Längsträger, bzw. der horizontalen, zwischen den zusammengesetzten Profilen der Pfosten einsetzbaren Ablagen, aufweisen. Insbesondere die Pfosten dieser besagten Struktur sind in Ihrer Herstellung aufwändig, sind schwer und ihre Reinigung ist mühsam.

Aus der EP 1169946 ist ein Kupplungs- und Verbindungssystem zwischen vertikalen Pfosten welche aus zwei, in sich eingreifende U-Profile und aus einfachen oder zusammengesetzten Profilen bekannt, welche an den besagten Pfosten als horizontale Längsträger angesteckt sind, an welchen eventuell Ablagen angebracht werden können. Die Position der gegenseitigen Verbindung zwischen den besagten Strukturelementen werden durch eine Reihe von Ausbuchtungen und/oder Ausstanzungen definiert, auch die beiden U-Profile welche die Pfosten bilden sind in ihrer Zusammenbaustellung durch eine Reihe von Ausstanzungen an einem Profil gehalten, in welche eine entsprechende Reihe von Ausbuchtungen am zweiten Profil einrasten. Die nach diesem System realisierten Strukturen sind ästhetisch nicht gefällig, sind von schwieriger Herstellung und weisen an jedem der Pfosten zwei senkrechte Fugen auf in welche Flüssigkeiten einsickern können, was die Reinigung erschwert.

Aus der GB 2048351 A1 ist eine Struktur für Möbel, wie z.B. Regale, Kästen oder Tische bekannt welche aus metallischen Profilen mit z.B. rechteckigem Querschnitt bestehen und welche an ihren Enden verbunden sind. Die Pfosten dieser Strukturen bestehen aus Profilen welche wesentlich U-förmigen Querschnitt haben, wobei die vom Verbindungsflansch parallel abstehenden Flansche doppelt und zueinander beabstandet sind. Die Längsschenkel der besagten parallelen Flansche sind gegen den Verbindungsflansch gebogen und sind mit zueinander beabstandeten und zur Längserstreckung des Pfostenprofils horizontal verlaufenden Langlöchern versehen. Die Strukturelemente (Ablagen, Türen, Scharniere) welche an diesen Pfosten angebracht werden können weisen Endausformungen auf welche zwischen die mit Langlöchern versehenen und eingebogenen Flansche der Pfosten eingeführt werden können, wobei abstehende seitliche Vorsprünge in die, an den Pfosten vorgesehenen, Langlöcher eingreifen. Dieser Eingriff wird durch Einschieben eines Keilelements aktiviert. Gemäß einer Variante erfolgt der Eingriff der Endausformungen der horizontalen Strukturelemente an den Pfosten mittels, an den Endausformungen gelagerter Hebel, welche eine Nockenausformung aufweisen, welche auf eine Quersprosse wirkt, welche gleitend an der Endausformung gelagert ist und bei Betätigung des Hebels in die Langlöcher des Pfostens eingreift. Dieses Verbindungssystem erfordert Endausformungen mit komplexem Einrastmechanismus welcher in der Herstellung aufwändig ist und den Einsatz beweglicher Elemente wie Keile oder Hebelmechanismen mit Nockenausbildung zwecks Arretierung/Freigabe der einzelnen Strukturelemente an den Pfosten voraussetzt. Im Fall von Belastungen und/oder Vibrationen zwischen den Pfosten und den daran angebrachten Strukturelementen besteht die Gefahr, dass sich die Keilelemente und/oder die Nockenausformungen verschieben und die sichere Verbindung in Frage stellen.

Die Erfindung stellt sich die Aufgabe metallische Trägerstrukturen für die Einlagerung, die Ablage und/oder die Ausstellung von Gütern zu schaffen welche wesentlich aus vertikalen Pfosten, aus Verbindungselementen oder freitragenden, an diesen befestigbaren, Elementen und aus horizontalen Längsträgern und/oder Ablagen der vorgenannten Art bestehen, welche einfach und kostengünstig herstellbar, bequem montierbar/demontierbar und reinigungsfreundlich sind, wobei vorzugsweise metallische einfach und kostengünstig herstellbare Profile und sichere Kupplungs- und Verbindungssysteme verwendet werden welche der Struktur eine beachtliche Stabilität verleihen.

Zur Lösung dieser Aufgabe wird erfindungsgemäß der Einsatz vorzugsweise metallischer, durch Extrusion oder Blechprofilierung hergestellter, Profile vorgeschlagen welche unter sich über, an den Profilen selbst vorgesehenen, Einhängausformungen zusammensetzbar sind welche, nach erfolgter Verbindung, im Innenbereich des Trägerprofils, bzw. des vertikalen Pfostens, eine nicht sichtbare stabile und sichere Verbindung garantiert, welche nicht der Staub- oder Schmutzablagerung ausgesetzt ist.

Die Trägerstrukturen welche mit Einsatz der erfindungsgemäßen Profile und Elemente realisierbar sind umfassen wesentlich vertikale Pfosten mit rohrförmigem Querschnitt, horizontale Verbindungselemente oder freitragende Elemente mit vorzugsweise umgekehrt T-förmigem Querschnitt, horizontale Längsträger mit U-förmigem Querschnitt oder rohrförmigem, rechteckigem Querschnitt und Ablagen mit umlaufenden umgebogenen Rändern.

Das rohrförmige Profil der Pfosten ist erfindungsgemäß dadurch gekennzeichnet, dass die beiden äußersten Schenkel der Wand welche das Profil bildet nach innen, in den Querschnitt gebogen sind um sich geradlinig zu erstrecken und dabei sich gegenseitig berühren oder wenig zueinander beabstandet sind. Vorzugsweise bilden die besagten nach innen ragenden Schenkel einen rechten Winkel mit der entsprechenden Außenwand des Profils, wobei der besagte Umlenkbereich gegen innen, längs der, bzw. nahe der, vertikalen Mittellinie der entsprechenden Wand des Profils verläuft. Es wird der Einsatz von zusammengesetzten Pfosten nicht ausgeschlossen, so dass man an mehreren als einer Seite, über nach innen in den Querschnitt ragende Schenkel verfügt. An beiden der besagten inneren Schenkel sind erfindungsgemäß Langlöcher oder Durchbrüche wesentlich an der gesamten Längserstreckung vorgesehen welche an beiden Schenkeln in entsprechender Position und unter sich beabstandet angeordnet sind.

Das Profil der Verbindungselemente oder der freitragend anbringbaren Elemente haben erfindungsgemäß T-förmigen Querschnitt, dieser kann von einfacher Art, beispielsweise durch Extrusion hergestellt sein oder kann aus zwei Elementen mit wesentlich identischem Querschnitt bestehen welche durch Profilierung von Metallblech hergestellt sind und zueinander in Längs- oder Querrichtung gleitend verbunden sind so, dass durch gegenseitiges Verschieben ein, in der Länge variables, Element zur Verfügung steht. In beiden Fällen weisen diese T-.Elemente erfindungsgemäß an beiden Enden oder, im Fall der freitragenden Anbringung, nur an einem der Enden, ein Einhängende auf welches an jedem der Seiten mit mindestens einem Einhängvorsprung versehen ist, welcher geeignet ist um in die, an den beiden inneren Schenkeln des vorgenannten rohrförmigen, den vertikalen Pfosten bildenden Profils, vorgesehenen Langlöcher oder Durchbrüche einzudringen und einzuhängen. Das Kuppeln zwischen dem vorgenannten Verbindungselement oder des freitragenden Elements, welches T-förmigen Querschnitt hat, mit dem rohrförmigen Profil welches den Pfosten bildet erfolgt durch Einführen des vertikalen Einhängendes des T-förmigen Elements, welches in diesem Bereich keine horizontalen Flansche aufweist, zwischen die beiden vertikalen inneren Schenkel des rohrförmigen Profils des Pfosten, wobei diese Schenkel leicht gespreizt werden, wobei das Eindringen der Einhängvorsprünge, welche links und rechts seitlich vom besagten Einhängende abragen, in die entsprechenden Langlöcher oder Durchbrüche, welche an beiden inneren Schenkeln des Pfosten vorgesehen sind, erreicht wird. Das definitive Einhängen erfolgt schließlich indem das besagte, zwischen die beiden Schenkel eingesetzte, Einhängende bzw. das entsprechende Verbindungselement oder das freitragende Element, nach unten gedrückt, bzw. belastet, wird wobei wegen der an den Einhängvorsprüngen vorgesehenen angewinkelten Flächen, ein Zug der Schenkel des Pfostens gegen das zwischenliegende Einhängende erfolgt, wodurch ein sicheres, stabiles und dauerhaftes Einhängen erreicht wird. Erfindungsgemäß können die Flächen, bzw. die Form der Einhängvorsprünge, bzw. der Langlöcher in welche diese eingreifen und einhängen, derart ausgebildet sein dass, außer dem gegenseitigen Zusammenziehen der inneren Schenkel des rohrförmigen Profils des Pfostens, auch eine Kraftkomponente gebildet wird welche geeignet ist um das Element mit T-förmigem Querschnitt mit der Stirnseite der seitlichen horizontalen Flansche gegen die Außenfläche des rohrförmigen Profil des Pfostens zu ziehen, wodurch das Anliegen am Pfosten, die Position im Winkel von 90° zum Pfosten und die Stabilität der Verbindung gesichert wird. Um zusätzlich das Anliegen beider Flansche des rohrförmigen Profils am vertikalen Flansch des eingesetzten T-förmigen Profils zu sichern, kann erfindungsgemäß, im Bereich der Abbiegung beider interner Schenkel von der vertikalen Außenfläche des rohrförmigen Profils nach innen, entsprechend jedem der genannten Schenkel, eine vertikale nach außen vorspringende Rippe vorgesehen sein. An den besagten beiden vertikalen Rippen des Profils des Pfostens kann eine entsprechende Kerbe wirken welche stirnseitig an den horizontalen Flanschen des T-förmigen Profils vorgesehen sind welches durch Wirkung des Einhängens am Pfosten horizontal gegen diesen gezogen wird.

Die Ablagen welche horizontal an den Verbindungselementen oder an den freitragenden Elemente welche horizontal an den vertikalen rohrförmigen Pfosten eingesetzt und eingehängt sind, befestigbar sind, können aus Blech hergestellt sein und an der Unterseite, Flansche und/oder Einhängkerben aufweisen; die Erfindung schließt jedoch nicht die Verwendung bekannter Ablagen aus unterschiedlichen Werkstoffen aus welche mit bekannten Vorrichtungen für das Einhängen und/oder das Befestigen an den entsprechenden Verbindungselementen oder an den freitragenden Elementen mit T-förmigen Querschnitt, aus.

Die horizontalen Längsträger können erfindungsgemäß Profile mit U-förmigem, rohrförmigem oder mit rechteckigem Querschnitt sein welche durch Extrusion oder durch Profilieren von Metallblech hergestellt sind; an den Enden sind diese mit Einhängrändern und/oder unteren Einhängkerben versehen welche von den Enden distanziert angeordnet sind um an den entsprechenden Verbindungselementen oder freitragenden Elementen, welche T-förmigen Querschnitt haben, anbringbar zu sein. Die Erfindung schließt jedoch nicht den Einsatz von Längsträgern aus unterschiedlichen Werkstoffen aus, welche an den Verbindungselementen oder an den freitragenden Elementen mit T-förmigem Querschnitt oder an den vertikalen Pfosten mittels bekannter Vorrichtungen befestigbar oder einhängbar sind.

Die Erfindung schließt nicht die Herstellung des rohrförmigen Profils der Pfosten und auch jenes der Verbindungselemente oder der freitragenden Elemente aus Kunststoff, z.B. durch Extrusion, aus.

Die Erfindung wird nachfolgend anhand eines, in den beigelegten Zeichnungen schematisch dargestellten, vorzuziehenden Ausführungsbeispiels von erfindungsgemäßen Profilen zum Zusammenbau tragender Strukturen und des entsprechenden Kupplungs- und Verbindungssystems zwischen diesen Profilen, näher erklärt; dabei erfüllen diese Darstellungen rein erklärenden, nicht einschränkenden Zweck.

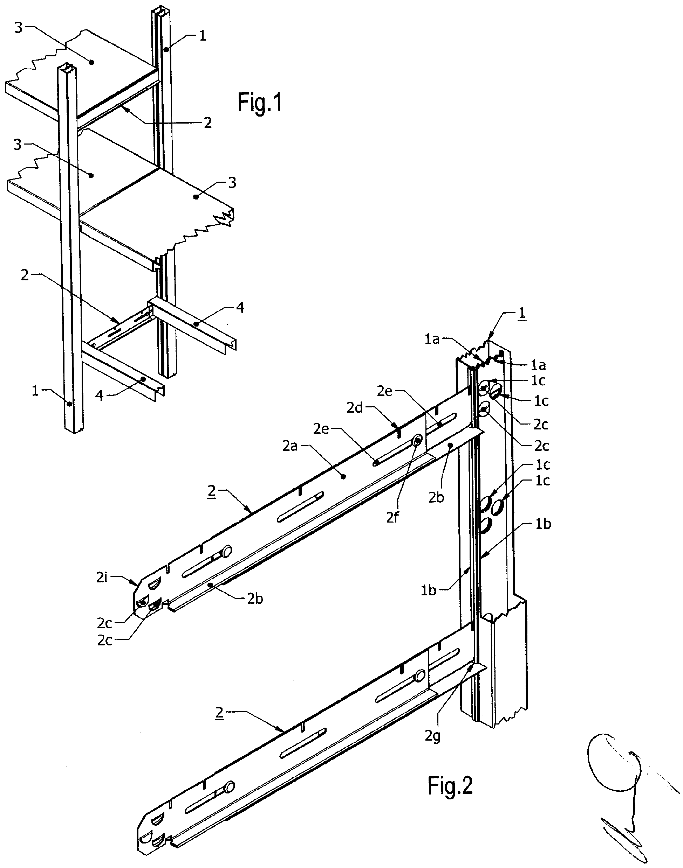

Die Fig. 1 ist die perspektivische Darstellung eines Teiles eines aus erfindungsgemäßen Profilen zusammengesetzten Regals wobei diese mittels erfindungsgemäßem System untereinander verbunden sind.
Die Fig. 2 zeigt in perspektivischer Darstellung einen erfindungsgemäßen vertikalen Pfosten, teilweise in Schnittdarstellung, mit zwei daran freitragend befestigten horizontalen Elementen mit variierbarer Länge mit T-förmigem erfindungsgemäßen Querschnitt.

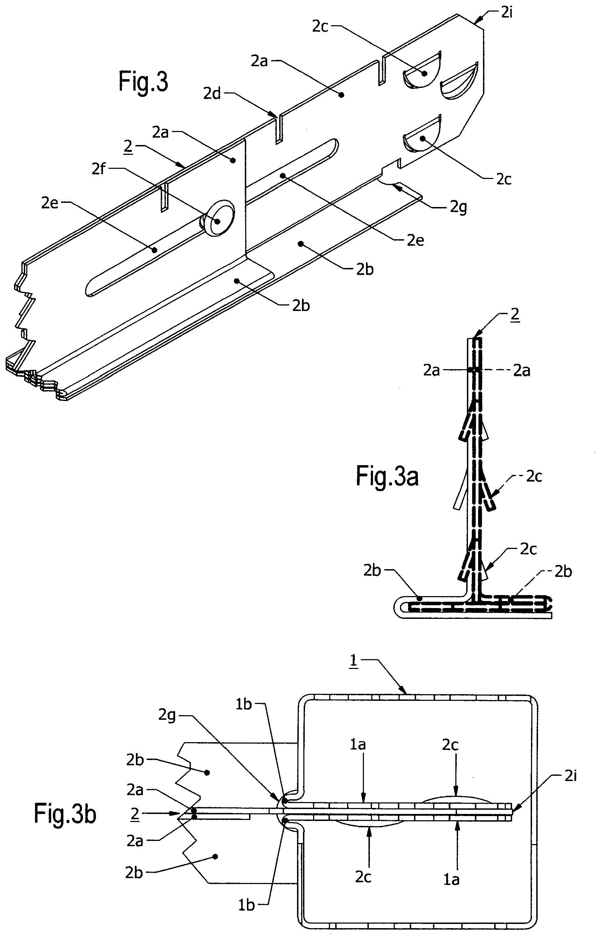

Die Fig. 3 zeigt in perspektivischer Darstellung einen Teil eines in Fig. 2 gezeigten Verbindungselements.
Die Fig. 3a zeigt die Vorderansicht eines in den Fig. 2 und Fig. 3 gezeigten Verbindungselements, wobei einer der T-förmigen Teile mit durchgezogener Linie und der zweite T-förmige Teil mit strichlierter Linie dargestellt ist.
Die Fig. 3b ist eine Draufsicht auf das rohrförmige Profil eines Pfostens mit einem in diesen eingesetzten T-förmigen Verbindungselement.

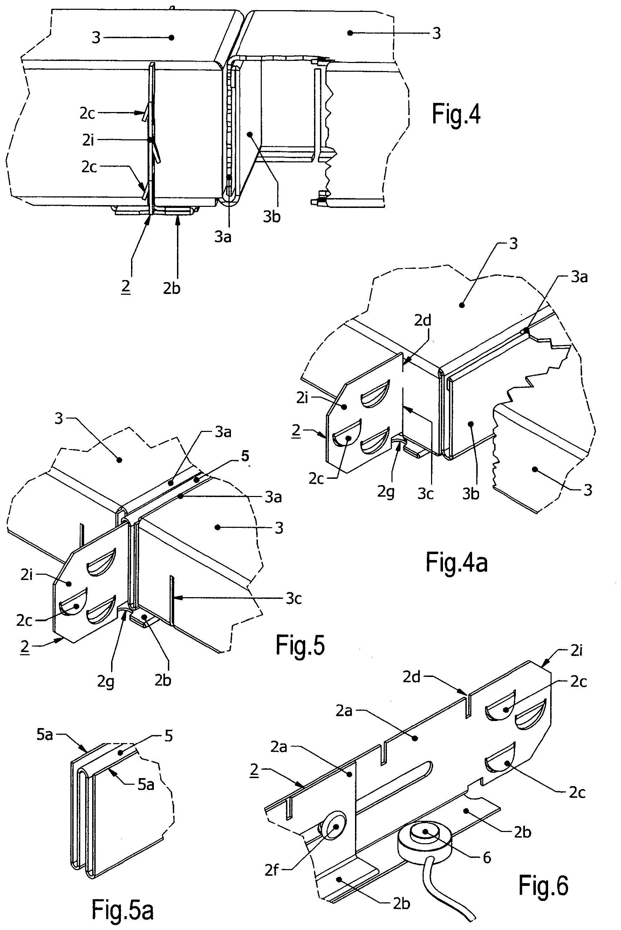

Die Fig. 4 ist die perspektivische Darstellung des Verbindungsbereiches zwischen einer Ablage aus Blech mit einem T-förmigen Verbindungselement und des Einhängbereiches des Endes der besagten Ablage an einer anliegenden Ablage.
Die Fig. 4a ist die perspektivische Darstellung des in Fig. 4 gezeigten Verbindungs- und Einhängbereichs, gemäß einem anderen Betrachtungswinkel.
Die Fig. 5 ist die perspektivische Darstellung eines Einhägbereiches zweier Ablagen aus Blech an einem horizontalen T-förmigen Verbindungselement mittels einem zweiseitig wirkenden Einhängelement.
Die Fig. 5a ist die perspektivische Darstellung des Endbereiches eines zweiseitig wirkenden, in Fig. 5 gezeigten, Einhängelements.
Die Fig. 6 ist die perspektivische Darstellung der Anbringung eines Drucksensors an einem der horizontalen Flansche eines horizontalen Verbindungselements.

Die Struktur eines Regals ist erfindungsgemäß aus vertikalen Pfosten 1, an welchen mehrere horizontale Verbindungselemente oder freitragende Elemente 2 mit umgekehrt T-förmigem Querschnitt, zueinander vertikal beabstandet, einsetzbar und befestigbar sind, zusammengesetzt. An den besagten Verbindungselementen oder freitragenden Elementen 2 können horizontale Längsträger 4 und/oder horizontale Ablagen 3 angebracht werden.

Um das Einhängen zwischen dem Pfosten 1 und dem horizontalen Element 2 auf, von außen, nicht sichtbarer und nicht der Ablagerung von Schmutz ausgesetzten, Weise und somit reinigungsfreundlich zu erreichen, schlägt die Erfindung vor, dass der rohrförmige Pfosten 1 zwei geradlinige, nach innen in den Querschnitt ragende und zueinander anliegende, bzw. zueinander um ein Maß beabstandete Schenkel 1a aufweist, wobei dieses Maß wesentlich der Stärke des Einhängendes 2i des horizontalen Vebindungselements oder des freitragenden Elements 2 entspricht. Die besagten Schenkel 1a weisen Langlöcher oder Durchbrüche 1c auf in welche sich Vorsprünge 2c einfügen und einhängen welche beidseitig vom Einhängende 2i des horizontalen Verbindungselements oder freitragenden Elements 2 mit T-förmigem Querschnitt abragen. Die Langlöcher oder Durchbrüche 1c können eine, sich nach unten, verengende Form aufweisen. Die am Einhängende 2i vorgesehenen Einhängvorsprünge 2c sind mindestens zwei, einer an der rechten und einer an der linken Seite, vorteilhafterweise sind es mehr als zwei um ein stabiles Einhängen zu erreichen und vorzugsweise kann ihre Position, in Bezug auf die Stirnfläche des Einhängendes 2i, derart angeordnet sein, dass diese Fläche an der Innenfläche des Pfostens 1 anliegt. Die Langlöcher 1c an den Schenkeln 1a des Pfostens 1 und/oder die Einhängvorsprünge 2c sind derart ausgeformt dass, während der Einhängbewegung am Verbindungselement 2, eine Kraftkomponente wirkt, welche die Tendenz hat, das Einhängende 2i nach innen des Querschnitts des Pfostens 1 zu ziehen und die beiden Schenkel 1a gegen das besagte zwischenliegende Einhängende 2i zu ziehen.

Gemäß einer Weiterentwicklung des Erfindungsgedankens kann, entsprechend dem Bereich der Abwinkelung der beiden Schenkel 1a des Pfostens nach innen des Querschnittes, wo diese einen Winkel von ca. 90° mit der Außenwand des Profils bilden, eine vertikale nach außen vorstehende Längsrippe 1b vorgesehen sein. Mit diesen äußeren Längsrippen 1b kann eine, stirnseitig an den horizontalen Flanschen 2b des Verbindungselements oder freitragenden Elements 2 vorgesehene, Kerbe 2g zusammenwirken. Diese Kerbe 2g und/oder der Querschnitt der Rippen 1b können erfindungsgemäß so ausgeformt sein, dass durch die Bewegung des Elementes 2 gegen den Pfosten 1, welche durch die Kraftkomponente während der Einhängbewegung zwischen dem Element 2 und dem Pfosten 1 bewirkt wird, eine Annäherung zwischen den beiden Rippen 1b und ein Zusammenziehen gegen den vertikalen Flansch des Einhängendes 2i erfolgt. Erfindungsgemäß kann das Verbindungselement oder freitragende Element 2 mit T-förmigem Querschnitt von einfacher, z.B. durch Extrusion hergestellter Art oder von zusammengesetzter Art, bestehend aus zwei wesentlich identischen Elementen mit T-förmigem Querschnitt, in Längsrichtung verschiebbar zusammengesetzter Art sein. In diesem letzten Fall sind beide Elemente 2 durch Profilierung von Blech hergestellt, der vertikale Flansch ist einlagig, einer der horizontalen Flansche ist doppellagig sich überdeckend gebogen, während der zweite horizontale Flansch 2b einlagig ist. Indem an einem der Elemente 2, welche das Verbindungselement oder das freitragende Element bilden, der horizontale Flansch 2b zweilagig derartig ausgebildet ist, dass zwischen den Schenkeln ein Abstand entsprechend der Blechstärke eingehalten wird, ist der Zusammenbau beider Elemente mit T-förmigem Querschnitt durch Einschieben des einlagigen Flansches eines Elementes in den freien entsprechenden Zwischenraum des anderen Elements bis auf Anschlag der beiden vertikalen Flansche, möglich. Diese Ausführungsform macht es möglich entsprechende Längslanglöcher 2e an beiden zusammengefügten und durch die Löngslöcher 2e durchgreifende Bolzen 2f mit Köpfen an beiden Enden gesicherte Elementen 2 vorzusehen um dadurch eine Längsverschiebung zwischen beiden zusammengefügten Elementen 2, zwecks Veränderung der Längserstreckung zu erreichen. Die Erfindung schließt nicht aus, dass die beiden zusammengefügten Elemente 2, zwecks Ausbildung eines in Längserstreckung veränderbaren Verbindungselementes, durch einen einzigen durchgeifenden Bolzen so verbunden sind, dass eine Schwenkbewegung zwischen den beiden zusammengefügten Elementen möglich ist um dadurch, in gewissen Situationen, die Montage/Demontage an den Pfosten zu erleichtern.

An den Verbindungselementen oder freitragenden Elementen 2 sind Ablagen 3 aus Blech mit umgebogenen Rändern anbringbar, welche an den Enden Einhängflansche 3a, 3b und/oder Einrastkerben 3c aufweisen. Diese Einhängflansche ermöglichen das direkte Einhängen am vertikalen Flansch 2a der Verbindungselemente oder freitragenden Elemente 2, bzw. das gegenseitige Einhängen zwischen zwei Enden zweier Ablagen 3. Die Einrastkerben 3c ermöglichen das direkte Einrasten an den vertikalen Flanschen 2a der Elemente 2, welche dafür mit entsprechenden Kerben 2d versehen sein können. Es können auch Elemente mit beidseitiger Einhängmöglichkeit 5 verwendet werden welche an den Elementen 2 mit beidseitig angeordneten Einhängflanschen 5a, zwecks Aufnahme der Einhängflansche 3a der Ablagen 3, angebracht werden.

Erfindungsgemäß können an den Verbindungselementen oder freitragenden Elementen 2 Längsträger 4 mit z.B. U-förmigem oder rechteckigem rohrförmigem Querschnitt angebracht werden. Diese Längsträger können an ihren Enden mit Einhängzungen und/oder Einrastkerben, ähnlich wie jene an den Ablagen, versehen sein. Die Längsträger 4 können alternativ mit Einhängzungen versehen sein welche mit den Einhängenden 2i der Verbindungselemente oder freitragenden Elemente 2 identisch sind, aber um 90° verdreht zur Längserstreckung der Längsträger 4 angeordnet sind um an den Pfosten 1 zwischen deren Flansche 1a eingesetzt werden zu können.

Erfindungsgemäß können zwischen den Verbindungselementen 2 und den daran angebrachten Ablagen bekannte Sensoren 6 angebracht werden um Gewichtsveränderungen an den Ablagen anzeigen zu können.

## Patentansprüche

1. Profile und Strukturelemente für den Zusammenbau tragender Strukturen, bestehend aus
- Pfosten (1),
und
- Verbindungselementen oder freitragenden Elementen (2)
und
- Längsträgern, welche an den Verbindungselementen oder freitragenden Elementen (2) anbringbar sind,
und/oder
- Ablagen, welche an den Verbindungselementen oder freitragenden Elementen (2) oder an den Längsträgern (4) anbringbar sind,
wobei die Pfosten (1) einen rohrförmigen rechteckigen Querschnitt aufweisen, welcher aus einem U-förmigen Querschnitt mit, von den gegeneinander ausgerichteten Endflanschen der U-förmig angeordneten Flanschen, zwischen parallel abstehenden, ins Innere des Querschnittes ragenden, sich zueinander parallel in Längsrichtung des Pfostens erstreckenden, zwei geradlinigen Schenkeln (1a) geformt ist, welche Längslöcher oder Durchbrüche (1c), welche sich an beiden Schenkeln (1a) betreffend die Form und Anordnung entsprechen, für die Aufnahme von an Einhängenden (2i) der Verbindungs- oder freitragenden Elemente (2) mit T-förmigem Querschnitt abstehenden Einhängvorsprünge (2c), aufweisen, **dadurch gekennzeichnet, dass** die nach innen ragenden zwei Schenkel (1a) der Pfosten (1) aneinander anliegen oder voneinander um ein Maß beabstandet sind welches der Stärke des Einhängendes (2i), ohne Einhängvorsprünge, des am Pfosten anbringbaren Verbindungselementes oder des freitragenden Elementes (2) entspricht und dass die Einhängvorsprünge (2c) beidseitig von den Einhängenden (2i) abragen, welche derart ausgeformt sind, dass diese, bei zwischen den beiden elastisch spreizbaren Schenkeln (1a) des Pfosten (1) eingeführten Einhängenden (2i), in die an beiden Schenkeln (1a) vorgesehenen Langlöcher oder Durchbrüche (1c) eindringen, um sich, infolge einer Verschiebung nach unten, gemäß der Längserstreckung des Pfostens, an den Schenkeln (1a) einzuhängen.

2. Profile und Strukturelemente gemäß Anspruch 1, **dadurch gekennzeichnet, dass** die Stärke der Schenkel (1a), im Bereich der Langlöcher oder Durchbrüche (1c), mindestens im Wirkungsbereich der Einhängvorsprünge (2c), als Einleitbereich mit Abschrägung ausgeformt sind und/oder dass die Wand der Schenkel im selben Bereich als Anzug ausgeformt ist.

3. Profile und Strukturelemente gemäß Anspruch 1, **dadurch gekennzeichnet, dass** die Langlöcher oder Durchbrüche (1c) an den Schenkeln (1a) des Pfostens (1) eine nach unten sich verengende Form aufweisen.

4. Profile und Strukturelemente gemäß Anspruch 1, **dadurch gekennzeichnet, dass** das Verbindungselement oder freitragende Element (2) einen umgekehrten T-förmigen Querschnitt aufweist und dass der vertikale Flansch (2a) mit seinem Endbereich, ohne horizontal abstehenden Flanschen (2b) als, mit Einhängvorsprüngen versehenes, Einhängende (2i) wirkt.

5. Profile und Strukturelemente gemäß Anspruch 1, **dadurch gekennzeichnet, dass** das Verbindungselement oder freitragende Element (2) aus zwei zusammengefügten, wesentlich identischen, aus Blech hergestellten Elementen mit umgekehrtem T-förmigen Querschnitt besteht, so dass einer der horizontalen Flansche (2b) doppellagig und der andere einlagig ist, dass an einem der besagten T-förmigen am doppellagigen Flansch die Blechschenkel nicht gegenseitig anliegen sondern um ein Maß beabstandet sind welches der Blechstärke entspricht, so dass dieser Flansch den einlagigen Flansch des zweiten T-förmigen Teiles aufnehmen kann, welcher in zusammengefügter Position mit seinem vertikalen Flansch (2a) am entsprechenden vertikalen Flansch des zweiten T-förmigen Elementes anliegt und dass beide zusammengefügten Teile mit entsprechenden Langlöchern (2e) versehen sind und durch, diese Langlöcher durchgreifende, Bolzen (2f) zusammengehalten sind um ein gegenseitiges Verschieben der beiden Teile in Längsrichtung zu ermöglichen.

6. Profile und Strukturelemente gemäß Anspruch 1, **dadurch gekennzeichnet, dass** die Form der Einhängvorsprünge (2c), welche am Einhängende (2i) des Verbindungselements oder freitragenden Elements (2) vorgesehen sind, sich gegen unten verschmälern und dass die Flächen der selben Einhängvorsprünge welche an den, mit Langlöchern oder Durchbrüchen (1c) versehenen, Schenkeln (1a) des Pfostens (1) wirken, mit spitzem Winkel gegen die Einhängfläche der Einhängvorsprünge angewinkelt sind.

7. Profile und Strukturelemente gemäß Anspruch 1, **dadurch gekennzeichnet, dass** das Profil des Pfostens (1), im Bereich beider nach innen ragenden Schenkel (1a), eine nach außen vorstehende Rippe (1b) aufweist, dass an diesen Rippen (1b), während dem Einhängen des Verbindungselements oder freitragenden Elements (2), am Pfosten (1) eine Kerbe (2g) wirkt welche stirnseitig an den horizontalen Flanschen (2b) des Verbindungselements oder freitragenden Elements (2) vorgesehen ist, wobei diese Flanschen gegen das Einhängende (2i) des besagten Verbindungselements (2) gedrückt werden.

8. Profile und Strukturelemente gemäß Anspruch 1, **dadurch gekennzeichnet, dass** die Längsträger (4) und die Ablagen (3) an den Enden mit Einhängrändern (3a, 3b) für das direkte Einhängen an den Verbindungselementen oder freitragenden Elementen (2) oder für das Einhängen mit Zwischenlage zweiseitiger Einhängelemente (5) versehen sind.

9. Profile und Strukturelemente gemäß Anspruch 1, **dadurch gekennzeichnet, dass** die Längsträger (4) mit Einhängenden (2i) versehen sind welche in einem Winkel von 90° zur Längserstreckung der Längsträger abstehen.

10. Kupplungs- und Verbindungsverfahren zwischen Profile und Strukturelemente gemäß Anspruch 1 - 7, **dadurch gekennzeichnet, dass** durch Einsetzen des Einhängendes (2i) zwischen den Schenkeln (1a) des Pfostens (1) diese durch den Vorstand der Einhängvorsprünge (2c) leicht elastisch gespreizt werden und ihre zueinander parallele Lage, infolge des Eindringens der besagten Einhängvorsprünge (2c) in die entsprechenden Langlöcher oder Durchbrüche (1c) an den beiden parallelen Schenkeln (1a) des Pfostens, erneut einnehmen und dass der Einhängvorgang durch das Verschieben des Verbindungselementes oder freitragenden Elementes (2), nach unten, gemäß Längserstreckung des Pfostens abgeschlossen wird.

## Claims

1. Profiles and structural elements for assembling load-bearing structures, consisting of
- uprights (1), and
- connecting elements or cantilever elements (2), and
- longitudinal supports which can be mounted on the connecting elements or cantilever elements (2), and/or
- shelves which can be mounted on the connecting elements or cantilever elements (2) or on the longitudinal supports (4),
wherein the uprights (1) have a tubular square cross-section which is formed of a U-shaped cross-section with, from the mutually aligned end flanges of the flanges arranged in a U-shape, between two straight legs (1a) projecting in parallel, said legs protruding into the interior of the cross-section and extending parallel to each other in the longitudinal direction of the upright, the legs having slots or apertures (1c), which on both legs (1a) correspond in terms of shape and arrangement, for receiving hook-in protrusions (2c) projecting at hook-in ends (2i) of the connecting elements or cantilever elements (2) having a T-shaped cross-section, **characterized in that** the inwardly protruding two legs (1a) of the uprights (1) bear against each other or are spaced apart from each other by an amount corresponding to the thickness of the hook-in end (2i), without hook-in protrusions, of the connecting element or cantilever element (2) that can be mounted on the upright, and **in that** the hook-in protrusions (2c) protrude on both sides from the hook-in ends (2i), which are shaped in such a way that they penetrate into the slots or apertures (1c) provided on the two legs (1a) when the hook-in ends (2i) are introduced between the two elastically spreadable legs (1a) of the upright (1), so as to hook onto the legs (1a) as a result of a downward displacement along the longitudinal extension of the upright.

2. The profiles and structural elements according to claim 1, **characterized in that** the thickness of the legs (la), in the region of the slots or apertures (1c), at least in the region of action of the hook-in protrusions (2c), are shaped as an inlet region with a bevel, and/or **in that** the wall of the legs is tapered in the same region.

3. The profiles and structural elements according to claim 1, **characterized in that** the slots or apertures (1c) on the legs (1a) of the upright (1) have a downwardly narrowing shape.

4. The profiles and structural elements according to claim 1, **characterized in that** the connecting element or cantilever element (2) has an inverted T-shaped cross-section, and **in that** the vertical flange (2a) acts with its end region, without the horizontally projecting flanges (2b), as a hook-in end (2i) provided with hook-in protrusions.

5. The profiles and structural elements according to claim 1, **characterized in that** the connecting element or cantilever element (2) consists of two joined-together, substantially identical elements made of sheet metal and having an inverted T-shaped cross-section, so that one of the horizontal flanges (2b) comprises two layers and the other comprises a single layer, **in that**, on one of said T-shaped on the double-layer flange, the sheet-metal legs do not bear against each other but instead are spaced apart by an amount corresponding to the sheet-metal thickness, so that this flange can receive the single-layer flange of the second T-shaped part, which in the joined-together position bears with its vertical flange (2a) against the corresponding vertical flange of the second T-shaped element, and **in that** the two joined-together parts are provided with corresponding slots (2e) and are held together by bolts (2f) that penetrate these slots, so as to enable a mutual displacement of the two parts in the longitudinal direction.

6. The profiles and structural elements according to claim 1, **characterized in that** the shape of the hook-in protrusions (2c), which are provided at the hook-in end (2i) of the connecting element or cantilever element (2), narrow downwards, and **in that** the surfaces of the same hook-in protrusions that act on the legs (1a) of the upright (1) provided with slots or apertures (1c) are angled at an acute angle with respect to the hook-in surface of the hook-in protrusions.

7. The profiles and structural elements according to claim 1, **characterized in that** the profile of the upright (1) has an outwardly projecting rib (1b) in the region of the two inwardly protruding legs (la), **in that** a notch (2g), which is provided on the end face of the horizontal flanges (2b) of the connecting element or cantilever element (2), acts on said ribs (1b) as the connecting element or cantilever element (2) is being hooked onto the upright (1), said flanges being towards against the hook-in end (2i) of said connecting element (2).

8. The profiles and structural elements according to claim 1, **characterized in that** the longitudinal supports (4) and the shelves (3) are provided, at the ends, with hook-in edges (3a, 3b) for hooking directly onto the connecting elements or cantilever elements (2) or for hooking with the interposition of two-sided hook-in elements (5).

9. The profiles and structural elements according to claim 1, **characterized in that** the longitudinal supports (4) are provided with hook-in ends (2i) which project at an angle of 90° with respect to the longitudinal extension of the longitudinal supports.

10. A method for coupling and connecting between profiles and structural elements according to claims 1 to 7, **characterized in that**, by inserting the hook-in end (2i) between the legs (1a) of the upright (1), said legs are elastically spread apart slightly by the overhang of the hook-in protrusions (2c) and reassume their mutually parallel position as a result of said hook-in protrusions (2c) penetrating into the corresponding slots or apertures (1c) on the two parallel legs (1a) of the upright, and **in that** the hook-in procedure is completed by displacing the connecting element or cantilever element (2) downwards along the longitudinal extension of the upright.

## Revendications

1. Profilés et éléments structurels pour l'assemblage de structures porteuses, constitués
- de poteaux (1), et
- d'éléments de connexion ou d'éléments en porte-à-faux (2), et
- de longerons pouvant être fixés aux éléments de connexion ou aux éléments en porte-à-faux (2), et/ou
- de plateaux pouvant être fixés aux éléments de connexion ou aux éléments en porte-à-faux (2) ou aux longerons (4),
les poteaux (1) ayant une section transversale rectangulaire tubulaire consistant en une section transversale en forme de U avec, à partir des brides d'extrémité mutuellement alignées des brides disposées en forme de U, entre des jambes parallèles en saillie (2) qui font saillie à l'intérieur de la section transversale et s'étendent parallèlement les unes aux autres dans la direction longitudinale du poteau, et deux jambes rectilignes (1a) qui présentent, sur les deux jambes (la), des fentes ou ouvertures allongées (1c) dont la forme et la disposition correspondent l'un à l'autre et qui reçoivent des saillies d'accrochage (2c) dépassant des extrémités d'accrochage (2i) des éléments de connexion ou en porte-à-faux (2) à section transversale en forme de T,
**caractérisé en ce que** les deux jambes (1a) des poteaux (1) qui font saillie vers l'intérieur s'appuient l'une contre l'autre ou sont espacées l'une de l'autre d'une dimension qui correspond à l'épaisseur de l'extrémité d'accrochage (2i), sans compter les saillies d'accrochage, de l'élément de connexion pouvant être fixé au poteau ou à l'élément en porte-à-faux (2), et **en ce que** les saillies d'accrochage (2c) font saillie des deux côtés des extrémités d'accrochage (2i), formées de telle sorte que, lorsque les extrémités d'accrochage (2i) sont insérées entre les deux jambes (1a) élastiquement déployables du poteau (1), elles pénètrent dans les fentes ou ouvertures (1c) prévues sur les deux jambes (1a) afin de s'accrocher aux jambes (1a) suite à un déplacement vers le bas le long de l'extension longitudinale du poteau.

2. Profilés et éléments structurels selon la revendication 1, **caractérisés en ce que** l'épaisseur des jambes (la), dans la zone des fentes ou ouvertures (1c), au moins dans la zone d'action des saillies d'accrochage (2c), est formée comme une zone d'insertion avec un biseau et/ou que la paroi des jambes dans ladite zone est formée comme un serrage.

3. Profilés et éléments structurels selon la revendication 1, **caractérisés en ce que** les fentes ou ouvertures (1c) dans les jambes (1a) du poteau (1) ont une forme qui se rétrécit vers le bas.

4. Profilés et éléments structurels selon la revendication 1 , **caractérisés en ce que** l'élément de connexion ou l'élément en porte-à-faux (2) a une section transversale en forme de T inversé et **en ce que** la bride verticale (2a) agit avec sa zone d'extrémité, sans brides faisant saillie horizontalement (2b), comme une extrémité d'accrochage (2i) munie de saillies d'accrochage.

5. Profilés et éléments structurels selon la revendication 1, **caractérisés en ce que** ledit élément de connexion ou en porte-à-faux (2) consiste en deux éléments joints sensiblement identiques faits de tôle métallique avec une section transversale en forme de T inversé, de sorte que l'une desdites brides horizontales (2b) est à double couche et l'autre est à simple couche, **en ce que**, sur l'une desdites brides en forme de T, dans la bride à deux couches, les branches de la tôle ne s'appuient pas l'une sur l'autre mais sont espacées d'une quantité correspondant à l'épaisseur de la tôle, de sorte que cette bride peut recevoir la bride à une couche de la deuxième partie en forme de T, qui, en position assemblée, repose avec sa bride verticale (2a) contre la bride verticale correspondante du deuxième élément en forme de T, et **en ce que** les deux parties assemblées sont pourvues d'ouvertures allongées correspondantes (2e) et sont maintenues ensemble par des goupilles (2f) passant à travers ces ouvertures allongées afin de permettre un déplacement mutuel des deux parties dans la direction longitudinale.

6. Profilés et éléments structurels selon la revendication 1, **caractérisés en ce que** la forme des saillies d'accrochage (2c) prévues à l'extrémité d'accrochage (2i) de l'élément de connexion ou de l'élément en porte-à-faux (2) se rétrécit vers le bas et **en ce que** les surfaces des mêmes saillies d'accrochage qui agissent sur les jambes (1a) du poteau (1) pourvues de fentes ou d'ouvertures allongées (1c) sont inclinées à un angle aigu vers la surface d'accrochage des saillies d'accrochage.

7. Profilés et éléments structurels selon la revendication 1, **caractérisés en ce que** le profilé du poteau (1), dans la zone des deux jambes (1a) faisant saillie vers l'intérieur, présente une nervure (1b) faisant saillie vers l'extérieur, **en ce que** sur ces nervures (1b), lors de l'accrochage de l'élément de liaison ou de l'élément en porte-à-faux (2) au poteau (1), agit une encoche (2g) qui est prévue sur la face avant des brides horizontales (2b) de l'élément de liaison ou élément en porte-à-faux (2), ces brides étant plaquées contre l'extrémité d'accrochage (2i) dudit élément de liaison (2).

8. Profilés et éléments structurels selon la revendication 1, **caractérisés en ce que** les longerons (4) et les plateaux (3) sont pourvus aux extrémités de bords d'accrochage (3a, 3b) pour un accrochage direct sur les éléments de liaison ou sur les éléments en porte-à-faux (2) ou pour un accrochage avec interposition d'éléments d'accrochage bilatéraux (5).

9. Profilés et éléments structurels selon la revendication 1, **caractérisés en ce que** les longerons (4) sont pourvus d'extrémités de suspension (2i) qui font saillie à un angle de 90° par rapport à l'extension longitudinale des longerons.

10. Procédé de couplage et de connexion entre des profilés et des éléments structurels selon la revendication 1-7, **caractérisé en ce qu'**en insérant l'extrémité d'accrochage (2i) entre les jambes (1a) du poteau (1), ces jambes sont légèrement écartées élastiquement par la protrusion des saillies d'accrochage (2c) et reprennent leur position parallèle les unes aux autres, suite à la pénétration desdites saillies d'accrochage (2c) dans les fentes ou ouvertures correspondantes (1c) des deux jambes parallèles (1a) du poteau, et **en ce que** l'opération d'accrochage est complétée par le déplacement vers le bas de l'élément de liaison ou élément en porte-à-faux (2) conformément à l'extension longitudinale du poteau.
